# EUROPÄISCHE PATENTANMELDUNG

(11) **EP 0 754 518 A1**
(43) Veröffentlichungstag der Anmeldung: **22.01.1997**
(21) Anmeldenummer: 96111026.9
(22) Anmeldetag: 09.07.1996
(51) Int. Cl.: B23K 26/00, H01S 3/08

(54) **Laser-Materialbearbeitungsvorrichtung mit akusto-optischem Güteschalter**

(30) Priorität: 19.07.1995 DE 19526331
(71) Anmelder: Carl Baasel Lasertechnik GmbH, D-82319 Starnberg (DE)
(72) Erfinder: Langhans, Lutz, Dr., 82319 Starnberg (DE)
(74) Vertreter: Klunker . Schmitt-Nilson . Hirsch

(57) **Zusammenfassung**

Zum Aufrauhen der Oberfläche einer Farbübertragungswalze wird ein CO₂-Laser (1) verwendet, in dessen Resonator ein akusto-optischer Güteschalter (10) angeordnet ist. Durch diesen Güteschalter läßt sich eine relativ hohe Pulsfrequenz von beispielsweise 50 kHz mit einer entsprechend hohen Bearbeitungsgeschwindigkeit erreichen.

## Beschreibung

Die Erfindung betrifft eine Laser-Materialbearbeitungsvorrichtung mit einem CO₂-Laser, der gepulstes Laserlicht auf ein zu bearbeitendes Material abstrahlt.

Bekanntlich lassen sich mit einer solchen Materialbearbeitungsvorrichtung Werkstücke in unterschiedlichster Weise bearbeiten. Möglich sind Gravieren, Ritzen, Bohren, Fräsen, Schneiden, Schweißen und dergleichen. Während die hier vorgestellte Laser-Materialbearbeitungsvorrichtung grundsätzlich für all diese Arbeiten einsetzbar ist, soll die Erfindung beispielhaft für einen speziellen Anwendungsfall erläutert werden, nämlich für eine Laser-Graviermaschine für Farbübertragungswalzen.

Eine solche Laser-Graviermaschine dient dazu, üblicherweise aus Keramik bestehende Farbübertragungswalzen an der Oberfläche aufzurauhen. Hierzu wird üblicherweise ein relativ leistungsstarker CO₂ -Laser in Verbindung mit einer Steuervorrichtung und einer Optik dazu verwendet, mit einem fokussierten, gepulsten Laserstrahl die Oberfläche eines Walzen-Rohlings abzufahren, um winzige Krater in die Oberfläche zu "schießen".

Die Bearbeitung der Walzenoberfläche durch den Laserstrahl erfolgt punktweise, und an jedem Punkt erzeugt der dort fokussierte Laserstrahl eine Materialentfernung, so daß kleinste Krater mit einem Durchmesser in der Größenordnung von 50 µm und einer Tiefe von 30 µm entstehen.

Die Aufgabe einer solchen Laser-Graviermaschine besteht also darin, die Oberfläche eines Walzen-Rohlings aufzurauhen. An jeder Punkt-Stelle wird ein Laserpuls fokussiert. Bei Verwendung eines CO₂₋Lasers, welcher die erfoderliche Energie liefert, ist allerdings nur eine begrenzte Puls-Wiederholfrequenz mit einer Obergrenze zwischen 5 und 10 kHz möglich, da ein schnelleres Einschalten/Ausschalten dieses Lasers nicht möglich ist. Bei einem Tastverhältnis, d.h. einem Verhältnis von Pulsdauer zur Periodendauer der Laserpulse von 1:10 und einer für eine bestimmte Lochgröße bei gegebenem Material erforderlichen Mindestenergie wird durch diese Vorgaben die Arbeitsgeschwindigkeit sehr stark eingeschränkt. Üblicherweise dauert die vollständige Bearbeitung einer Farbübertragungswalze mehrere Stunden bis Tage.

Der Erfindung liegt die Aufgabe zugrunde, eine Laser-Materialbearbeitungsvorrichtung der eingangs genannten Art derart weiterzubilden, daß eine vergleichsweise hohe Bearbeitungsgeschwindigkeit erzielt wird.

Gelöst wird diese Aufgabe erfindungsgemäß dadurch, daß als Laser ein CO₂-Laser mit einem akusto-optischen Güteschalter (AO-Güteschalter) verwendet wird.

Mit Hilfe des in bekannter Weise ausgebildeten Güteschalters im Laser-Resonator läßt sich eine wesentlich höhere Pulsfrequenz des CO₂-Lasers erzielen. Es sind Pulsfrequenzen von bis zu 50 kHz möglich. Wenn der Güteschalter geschlossen ist, während die elektrische Entladung im Lasermedium stattfindet, werden alle Laser-Niveaus gefüllt, es kann sich jedoch wegen des geschlossenen Güteschalters noch keine stehende Welle im Resonator ausbilden. Wird der Güteschalter dann geöffnet, wird die Welle im Resonator verstärkt, und es kommt zu einem kurzen und starken Laserpuls.

Die Verwendung von akusto-optischen Güteschaltern in Lasern ist an sich bekannt, jedoch nicht in Verbindung mit CO₂-Lasern. So ist es zum Beispiel bei Nd-YAG-Lasern bekannt, mit Hilfe von aktiven Güteschaltem Riesenpulse zu erzeugen.

Ein problematischer Aspekt bei der Verwendung von Güteschaltern bei CO₂-Lasern ist die Gefahr, daß trotz relativ geringer Absorption von Energie das Material des Güteschalters zu stark erhitzt wird, weil die Leistungsdichte im Resonator sehr hoch ist. Bislang wurde folgerichtig deswegen der Standpunkt vertreten, daß akusto-optische Güteschalter in Verbindung mit für ihre hohe Leistung bekannten CO₂-Lasern nicht möglich sind.

Man hat daher versucht, mit anderen Güteschaltern zu arbeiten, z.B. mit mechanischen Choppern. Es ist jedoch schwierig, die erforderlichen hohen Schaltfrequenzen mit hinreichend steilen Schaltflanken zu erreichen. Solche Laser gibt es daher im Labor, für industrielle Anwendungen sind sie nicht geeignet.

Eine andere Möglichkeit, die versucht wurde, ist die Benutzung von akusto-optischen (AO-)Modulatoren außerhalb des Resonators, wo die Leistungsdichten niedriger sind als im Resonator. Die dabei erzielbaren mittleren Leistungen sind jedoch gering. Die maximale Belastung eines AO-Modulators aus Germanium ist 100W. Diesen Wert muß man noch mit dem Beugungswirkungsgrad (ca. 80 %) und dem Tastverhältnis multiplizieren und erhält dann zu geringe nutzbare Leistungen. Eine Erhöhung der Leistung über eine Erhöhung des Tastverhältnisses führt zu längeren Pulsen. Um zu vermeiden, daß dann längliche Krater auf der bewegten Walzenoberfläche entstehen, kann man den AO-Modulator als Deflektor einsetzen, und den Strahl durch Ablenkung auf der Walzenoberfläche mitführen. Dadurch kann man bei hohen Tastverhältnissen noch kleine, runde Krater erzeugen. Eine solche Anordnung ist in WO 93/25387 beschrieben. Allerdings erfordert die zusätzliche, synchrone Ablenkung des Strahls einen erheblichen zusätzlichen Aufwand.

Betrachtet man die oben angesprochenen Betriebskenngrößen bei einer Laser-Materialbearbeitungsvorrichtung, insbesondere einer Laser-Gravieranlage für Farbübertragungswalzen, so zeigt sich, daß der Güteschalter bei der angestrebten und auch erreichten Pulsfrequenz von 50 kHz und der benötigten Leistung von ca. 50 W durchaus den thermischen Belastungen standzuhalten vermag. Die für einen CO₂-Laser in Frage kommenden AO-Güteschalter bestehen insbesondere aus Germanium-Elementen, deren Leistungs-Obergrenze unterhalb von 100 W liegt. Erfindungsgemäß sind die Betriebsparameter des Lasers so eingestellt, daß eine Ausgangsleistung von 20 bis 80 W vorzugsweise 40 bis 60 W erreicht wird, wobei die Pulsfrequenz zwischen 5 und 100 kHz liegt, vorzugsweise etwa 50 kHz beträgt. Bei diesen Werten wird der Güteschalter nicht über seine Belastbarkeitsgrenzen hinaus beansprucht, wenn man den Reflexionsgrad des Auskoppelspiegels niedrig genug wählt.

Die thermische Belastung des AO-Güteschalters im Resonator ist besonders gering, wenn man ihn in einen Ringlaser einsetzt. In einem Ring-Resonator hat man keine stehende Welle mit hoher Intensität, sondern nur noch eine umlaufende Welle. Diese Welle hat nach der Reflexion am Auskoppelspiegel nur noch eine geringe Intensität, die vom Reflexionsgrad des Auskoppelspiegels abhängt. Es ist auch möglich, instabile Resonatoren zu verwenden.

Allgemein gesagt läßt sich bei Laser-Materialbearbeitungsvorrichtungen mit CO₂-Laser, die eine Materialbearbeitung mit Hilfe einer Pulsfolge von oberhalb 5 bis 10 kHz vornehmen, ein Güteschalter im Resonator zur Erhöhung der Bearbeitungsgeschwindigkeit einsetzen. Durch die Verwendung des Güteschalters wird die Pulsfrequenz auf beispielsweise 50 kHz erhöht. Die einzelnen Laserpulse werden schmaler und in ihrer Amplitude höher als die Pulse, die durch elektrisches Ein-/Ausschalten des Lasers oder durch einen externen Modulator erhalten werden können. Bei zwar schmaleren Pulsen wird durch die höhere Pulsleistung ebenfalls die für die Bearbeitung einer Stelle auf der Materialoberfläche erforderliche Energie aufgebracht. Geht man von einem im Vergleich zu früheren Vorrichtungen unveränderten Tastverhältnis (Pulsdauer zu Periodendauer) aus, so erhöht sich die Pulsfrequenz entsprechend der Pulsverkürzung.

Zwar wird in dem Güteschalter während des schmalen, jedoch hohen Pulses Wärmeenergie freigesetzt, jedoch hat der Güteschalter in der an den Puls anschließenden Pause ausreichend Zeit zum Regenerieren. Die durch die mittlere Leistung gegebene thermische Belastung des Güteschalters liegt unterhalb der maximalen Belastbarkeitsgrenze.

Im folgenden werden Ausführungsbeispiele der Erfindung anhand der Zeichnung näher erläutert. Es zeigen:
- Fig. 1: eine schematische Darstellung eines Lasers einer erfindungsgemäßen Laser-Materialbearbeitungsvorrichtung mit akusto-optischem Güteschalter, und
- Fig. 2: eine schematische Darstellung eines Lasers einer erfindungsgemäßen Laser-Materialbearbeitungsvorrtchtung mit akusto-optischem Güteschalter und Ring-Resonator,

Als Beispiel für eine erfindungsgemäße Laser-Materialbearbeitungsvorrichtung dient eine Laser-Graviermaschine für sogenannte Anilox-Farbübertragungswalzen. Wie eingangs erläutert, werden mit Hilfe eines Lasers über eine Optik kleine Löcher in der Oberfläche eines Walzen-Rohlings erzeugt, wozu die Oberfläche der Walze zeilenweise abgerastert wird. Solche Graviermaschinen sind an sich bekannt und brauchen deshalb hier nicht näher erläutert zu werden.

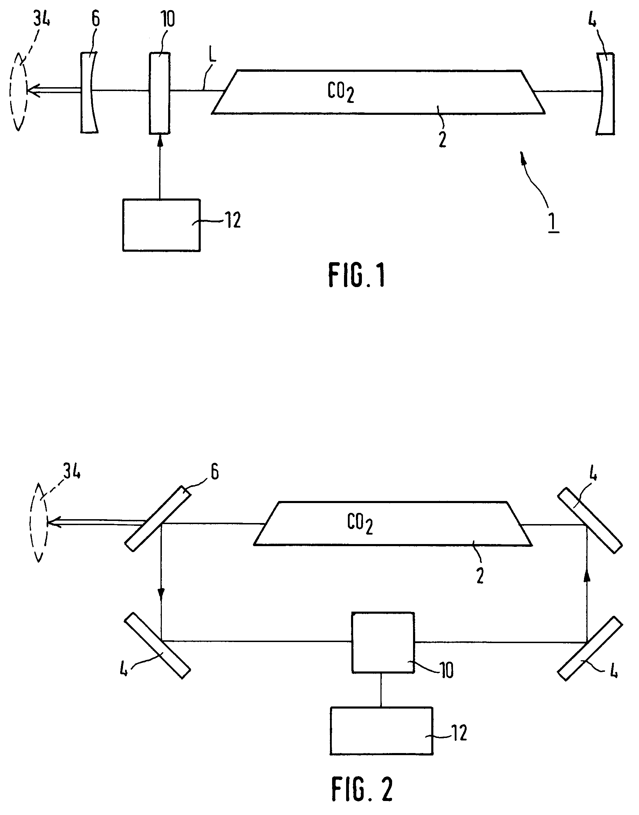

Ein allgemein mit 1 bezeichneter CO₂-Laser enthält ein Laser-Rohr 2, welches als Lasermedium CO₂-Gas enthält. Mit einer an sich bekannten und in Fig. 1 nicht dargestellten Entladungsvorrichtung erfolgt die Anregung des Lasermediums. Auf der rechten Seite des Rohrs 2 befindet sich ein hochreflektierender Spiegel 4, auf der linken Seite befindet sich ein teildurchlässiger Auskoppelsppiegel 6. Zwischen dem Auskoppelspiegel 6 und dem Laser-Rohr 2 befindet sich ein AO-Güteschalter 10, der hier als aktiver Germanium-Güteschalter ausgebildet ist.

Der von dem Auskoppelspiegel 6 ausgekoppelte Laserstrahl wird über eine angedeutete Optik 34 auf die zu bearbeitende Oberfläche einer aus Keramik bestehenden Farbübertragungswalze fokussiert.

Im Betrieb wird die Entladung in dem Laser-Rohr 2 dauernd aufrechterhalten, während der Güteschalter 10 durch ein von einer Steuerung 12 erzeugtes Steuersignal angesteuert wird. Beim "Öffnen" des Güteschalters wird ein schmaler Laserpuls relativ hoher Amplitude erzeugt. Beim "Schließen" des Güteschalters 10 wird kein Laserstrahl erzeugt. Das Tastverhältnis, also das Verhältnis von Pulsdauer zur Periodendauer des Laserpulszugs beträgt etwa 1:10. Die Periodendauer des Pulszugs entspricht einer Arbeitsfrequenz von 50 kHz. Jeder Impuls erzeugt in der Oberfläche der Walze ein kleines Loch mit einem Durchmesser von etwa 50 µm und eine Tiefe von etwa 30 µm.

Bei dem Ringlaser in Fig. 2 wird der Strahl über drei hochreflektierende Spiegel 4 und einen teilreflektierenden Auskoppelspiegel 6 in einen ringförmigen Umlauf gelenkt. Im Ringresonator ist ein Laserrohr 2 angeordnet, welches das Lasermedium CO₂-Gas enthält, sowie ein AO-Güteschalter 10.

## Patentansprüche

1. Laser-Materialbearbeitungsvorrichtung mit einem Laser, der gepulstes Laserlicht auf ein zu bearbeitendes Material abstrahlt, **dadurch gekennzeichnet,** daß als Laser ein CO₂-Laser (1) mit einem akustooptischen Güteschalter (AO-Güteschalter) (10) verwendet wird.

2. Laser-Materialbearbeitungsvorrichtung nach Anspruch 1, **dadurch gekennzeichnet,** daß der Laser (1) mindestens eine der folgenden Betriebsbedingungen aufweist:
Ausgangsleistung: 20.....80, vorzugsweise 40.....60 W;
Pulsfrequenz: 5.....100, vorzugsweise 40.....60 kHz.

3. Laser-Materialbearbeitungsvorrichtung nach Anspruch 1 oder 2, **dadurch gekennzeichnet,** daß der Laser einen Ringresonator aufweist.
